# EUROPÄISCHE PATENTSCHRIFT

(11) **EP 1 053 140 B1**
(45) Veröffentlichungstag und Bekanntmachung des Hinweises auf die Patenterteilung: **12.06.2002**
(21) Anmeldenummer: 99903636.1
(22) Anmeldetag: 16.01.1999
(51) Int. Cl.: B60S 1/08

(54) **VERFAHREN ZUM DETEKTIEREN VON AUF EINER LICHTDURCHLÄSSIGEN SCHEIBE BEFINDLICHEN OBJEKTEN SOWIE VORRICHTUNG**
METHOD FOR DETECTING OBJECTS LOCATED ON A TRANSPARENT PANEL, AND CORRESPONDING DEVICE
PROCEDE POUR DETECTER DES OBJETS SE TROUVANT SUR UNE PLAQUE TRANSPARENTE ET DISPOSITIF CORRESPONDANT

(30) Priorität: 30.01.1998 DE 19803694
(43) Veröffentlichungstag der Anmeldung: 22.11.2000
(73) Patentinhaber: Leopold Kostal GmbH & Co. KG, 58507 Lüdenscheid (DE)
(72) Erfinder: BLÄSING, Frank, D-59457 Werl (DE); BENDICKS, Norbert, D-58675 Hemer (DE)
(74) Vertreter: Haverkamp, Jens
(86) Internationale Anmeldenummer: EP9900229
(87) Internationale Veröffentlichungsnummer: WO9938737

(56) Entgegenhaltungen:
- EP-A- 0 832 798
- WO-A-94/14053
- WO-A-94/17493
- US-A- 4 806 776
- US-A- 4 867 561
- US-A- 5 313 072

## Beschreibung

Die Erfindung betrifft ein Verfahren zum Detektieren von auf einer lichtdurchlässigen Scheibe befindlichen, bei einer Beleuchtung Lichtreflexe erzeugenden Objekten unter Verwendung einer zumindest ein optisches Sensorarray enthaltenden Aufnahmeeinheit umfassend folgende Schritte:
- Beleuchten der Scheibe zum Erzeugen von Lichtreflexen in oder an auf der Scheibe befindlichen Objekten von derjenigen Scheibenseite, hinter der die Aufnahmeeinheit angeordnet ist,
- bildliches Erfassen eines beleuchteten Scheibenausschnitts mit der Aufnahmeeinheit.

Ferner betrifft die Erfindung eine Vorrichtung zum Detektieren von auf einer lichtdurchlässigen Scheibe befindlichen beleuchteten Objekten, umfassend eine Aufnahmeeinheit mit einem optischen Sensorarray zum Erfassen von der Beleuchtungseinrichtung emittierter und reflektierter Lichtstrahlen und eine Auswerteeinheit.

Ein solches Verfahren ist aus US-A-5 313 072 bekannt. Gegenstand dieses Dokumentes ist ein Regensensor, bei dem hinter der Windschutzscheibe eine Sammellinse und im Strahlengang hinter der Sammellinse ein Sensorarray angeordnet ist. Teil des Regensensors ist ferner eine Lichtquelle, die mittig auf dem Sensorarray abgebildet ist. Die Sammellinse ist zum scharfen Abbilden der Lichtquelle auf das Sensorarray focussiert. Befinden sich auf der Windschutzscheibe keine Regentropfen oder dergleichen, erfolgt eine Belichtung des zentralen Bildpunktes des Sensorarrays infolge einer Reflektion der von der Lichtquelle emittierten Lichtstrahlen an der Innenseite der Windschutzscheibe. Befinden sich dagegen Wassertropfen auf der Windschutzscheibe in einem ausreichenden Maße, daß die von der Lichtquelle emittierten Lichtstrahlen anhand dieser Objekte anders zu dem Sensorarray reflektiert werden, so daß andere Bildpunkte des Sensorarrays belichtet werden, stellt dies eine Störung der ursprünglichen Abbildungsanordnung dar. Ein derartig belichtetes Sensorarray läßt sodann auf eine Scheibenbenetzung schließen.

Zur Realisierung des Regensensors gemäß diesem Dokument wird ein Sensorarray mit lediglich drei Bildpunkten benötigt, wobei ein zentraler Bildpunkt zum Abbilden der Lichtquelle und die beiden weiteren, diametral bezüglich dieses Lichtpunktes gegenüber liegenden zur Aufnahme eventueller Störungen, die zu einer Lichtbrechung und somit zu einer Belichtung dieser Bildpunkte führen, dienen. Eine ortsaufgelöste Erfassung bezüglich der Verteilung der auf der Windschutzscheibe befindlichen Regentropfen ist beim Gegenstand dieses Dokumentes nicht möglich. Ausgewertet wird letztendlich beim Gegenstand dieses Dokumentes die Amplitude der Intensitäten, die die weiteren Bildpunkte des Sensorarrays aufweisen.

In einer Weiterbildung ist bei diesem vorbekannten Regensensor vorgesehen, weitere Bildpunkte dem Sensorarray zuzuordnen, was jedoch lediglich zu einer Auswertung des Benetzungsgrades dient und nicht zum Bestimmen einer ortsaufgelösten Verteilung von Regentropfen auf dem betrachteten Windschutzscheibenausschnitt.

Nachteilig ist bei dem Gegenstand dieses Dokumentes, daß das Sensorarray mit Fehlinformationen beaufschlagt werden kann, die aus hintergrundbedingten Störeinflüssen resultieren, beispielsweise durch Lichtreflexe oder entgegenkommende Fahrzeuge ausgelöst sind.

Aus WO 94/17493 A1 ist ein Verfahren und eine Einrichtung zur Bildverarbeitung bekannt geworden. Beschrieben ist in diesem Dokument ein bildgebendes System, bei dem im Gegensatz zum Gegenstand der US-A-5 313 072 durch Einsatz von zwei Sensoren eine einzige Bilddarstellung generiert wird und nicht etwa eine Detektion unterschiedlicher Gegenstände vorgenommen wird. Die in WO 94/17493 A1 beschriebene Einrichtung verwendet zwei Sensorarrays unterschiedlicher Auflösung, von denen anschließend ein Differenzbild erzeugt wird. Aufgenommen wird mit beiden Bildern ein identischer Bildausschnitt zur gleichen Zeit und zu gleichen Belichtungsbedingungen. Bei der anschließenden Ermittlung des Differenzbildes werden bevorzugt Kanten stärker herausgebildet. Aus diesem Grunde dient das in diesem Dokument beschriebene Verfahren insbesondere zur Anwendung in der Radiologie zur verbesserten Darstellung von Knochen am Übergang zwischen dem Gewebe und dem Knochen.

Eine Unterdrückung bzw. Herausfilterung hintergrundsbedingter Störungen ist beim Gegenstand dieses Dokumentes weder vorgesehen noch beschrieben.

Aus US-A-4 806 776 ist eine elektrische Beleuchtungs- und Detektionseinrichtung bekannt, bei der zur Abschätzung der Höhe eines zu detektierenden Objektes dieses aus unterschiedlichen Betrachtungswinkeln aufgenommen wird. Auch in diesem Dokument ist nicht beschrieben, in welcher Art und Weise hintergrundbedingte Störeinflüsse bei einer Objektdetektion auf einer lichtdurchlässigen Scheibe zu beseitigen wären. Darüber hinaus ist das in diesem Dokument beschriebene Verfahren nicht gattungsgemäß.

Ein weiterer Regensensor ist aus US-A-4 867 561 bekannt. Das in diesem Dokument beschriebene Detektionsverfahren arbeitet nach dem Reflektionsprinzip unter Ausnutzung einer Totalreflektion an der Außenseite der Windschutzscheibe. Zu diesem Zweck umfaßt der Regensensor eine als Beleuchtungseinrichtung ausgebildete Infrarotdiode (IR-Diode), deren emittierte Lichtstrahlen innenseitig auf einen zu beobachtenden Windschutzscheibenausschnitt gerichtet sind. Als Aufnahmeeinheit wird ein optisches Sensorarray verwendet, dem zur Abbildung der IR-Diode auf seiner photosensitiven Oberfläche eine Linse vorgeschaltet ist. Die Beleuchtungseinrichtung und die Aufnahmeeinheit sind dergestalt zueinander angeordnet, daß von der Leuchtdiode emittierte Lichtstrahlen, die durch Totalreflektion der Windschutzscheibe reflektiert werden, bei freier Windschutzscheibe auf dem Sensorarray abgebildet werden. Das vorbekannte Verfahren nutzt die Tatsache, daß bei Nichtvorhandensein von Objekten auf der Windschutzscheibe besagte Totalreflektion der von der Beleuchtungseinrichtung emittierten Lichtstrahlen an der Außenseite der Windschutzscheibe zum Sensorarray hin erfolgt. Befinden sich dagegen Regentropfen auf der Außenseite der Windschutzscheibe werden Lichtstrahlen aus dem Regentropfen ausgekoppelt, so daß nur ein Teil der Lichtstrahlen zum Sensorarray hin reflektiert wird. Folglich ist die von dem Sensorarray erfaßbare Lichtintensität bei einem Vorhandensein von Regentropfen auf der Windschutzscheibe geringer verglichen mit der erfaßten Lichtintensität bei einer Totalreflektion.

Die Signale des Sensorarrays werden in einer dem Sensorarray nachgeschalteten Auswerteeinheit zunächst gefiltert, um diejenigen Signalkomponenten der weiteren Auswertung nicht zu kommen zu lassen, die nicht den von der Beleuchtungseinrichtung emittierten Lichtstrahlen zugeordnet werden können. Zu diesem Zweck ist die Filterung wellenlängenspezifisch ausgerichtet. Das gefilterte Sensorarrayausgangssignal wird anschließend einem Vergleicherglied zugeführt, in welchem ein Schwellwertvergleich der erfaßten Lichtintensität mit einem vorgegebenen Schwellwert durchgeführt wird. Ist die erfaßte Lichtintensität geringer als das Schwellwertsignal, liegt am Ausgang des Vergleichergliedes ein Steuersignal an, mit welchem ein Mikrocomputer zum Ansteuern des Wischermotors beaufschlagt wird.

In welcher Art und Weise hintergrundbedingte Störeinflüsse beseitigt oder unterdrückt werden könnten, wird in diesem Dokument nicht beschrieben. Von seiner Abbildungsanordnung entspricht der Gegenstand dieses Dokumentes somit im Grundsatz dem aus US-A-5 213 072 bekannten.

Ausgehend von diesem diskutierten Stand der Technik liegt der Erfindung daher zum einen die Aufgabe zugrunde, ein Verfahren zum Detektieren von auf einer lichtdurchlässigen Scheibe befindlichen Objekten vorzuschlagen, mit dem eine exaktere Detektion von auf der Windschutzscheibe befindlichen Objekten bei gleichzeitiger Unterdrückung nicht relevanter Lichtsignale bzw. von Störeinflüssen gewährleistet ist. Ferner liegt der Erfindung die Aufgabe zugrunde, eine entsprechende Vorrichtung bereit zu stellen.

Die verfahrensbezogene Aufgabe wird erfindungsgemäß durch Weiterbildung des eingangs genannten Verfahrens gelöst durch
- Bereitstellen von zwei, ein Bildpaar bildenden Scheibenausschnittsbildern, in welchen beiden Bildern der oder die durch die Beleuchtung erzeugten Lichtreflexe eines auf der Scheibe befindlichen Objektes jeweils an lageunterschiedlichen Bildpunkten angeordnet sind,
- Ermitteln des Differenzbildes der beiden Bilder eines Bildpaares durch Subtraktion der Inhalte lagegleicher Bildpunkte des einen Scheibenausschnittsbildes von denjenigen des anderen Scheibenausschnittsbildes und
- anschließendes Auswerten des ermittelten Differenzbildes hinsichtlich der den einzelnen Bildpunkten zugeordneten Inhalten.

Die vorrichtungsbezogene Aufgabe wird bei einer Vorrichtung, in der als Aufnahmeeinheit ein einziges Sensorarray in einer solchen Anordnung zur Scheibe vorgesehen ist, daß die zu beobachtende Scheibenoberfläche des von dem Sensorarray erfaßten Scheibenausschnittes im Tiefenschärfenbereich der sich auf der photosensitiven Oberfläche des Senser-arrays darstellenden Abbildung des Scheibenausschnittes liegt, dadurch gelöst, daß die Beleuchtungseinrichtung zumindest zwei voneinander beabstandete, den von der Aufnahmeeinheit betrachteten Scheibenausschnitt aus unterschiedlichen Richtungen beleuchtende Lichtquellen umfaßt, so daß Störeinflüsse, die nicht auf durch die Beleuchtung erzeugte Lichtreflexe in den auf der Scheibe befindlichen Objekten zurückzuführen sind, in beiden Scheibenausschnittsbildern jeweils auf lagegleichen Bildpunkten abgebildet werden, wobei die Inhalte ladegleicher Bildpunkte des einen Scheibenausschnittsbildes von demjenigen des anderen Scheibenausschnittsbildes subtrahiert werden, so daß nach einer Differenzbildung die Störeinflüsse enthaltenden Bildpunktinhalte des Differenzwertes sämtlich den Wert 0 aufweisen.

Ferner wird die vorrichtungsbezogene Aufgabe dadurch gelöst, daß die Aufnahmeeinheit zwei voneinander beabstandete optische Sensorarrays in einer stereoskopischen Anordnung zur Scheibe umfaßt, bei der die zu beobachtende Scheibenoberfläche des von den Sensorarrays erfaßten Scheibenausschnittes im Tiefenschärfenbereich der sich auf den photosensitiven Oberflächen der Sensorarrays darstellenden Abbildung des Scheibenausschnittes liegt, welche optischen Sensorarrays zum Betrachten eines Scheibenausschnittes dergestalt angeordnet sind, daß der sich in einem bestimmten Abstand zur betrachtenden Scheibe befindliche Hintergrund auf beiden Sensorarrays an lagegleichen Bildpunkten abgebildet wird, so daß hintergrundbedingte Störeinflüsse durch eine Subtraktion der Bildpunktinhalte der lagegleichen Bildpunkte der beiden Scheibenausschnittsbilder voneinander sämtlich den Wert 0 aufweisen.

Gemäß dem vorgeschlagenen Verfahren erfolgt eine Auswertung des beobachteten Scheibenausschnittes nicht nur anhand eines einzigen Bildes bzw. anhand der Inhalte seiner Bildpunkte, sondern anhand von zwei einzelnen Bildern, die im Zusammenhang dieser Ausführungen jeweils als Scheibenausschnittsbild und gemeinsam als Bildpaar angesprochen sind. Dabei ist vorgesehen, daß mit den beiden Scheibenausschnittsbildern zwar der gleiche Scheibenausschnitt wiedergebbar ist, daß jedoch die durch die Beleuchtung erzeugten Lichtreflexe eines auf der Scheibe befindlichen Objektes in jedem Scheibenausschnittsbild auf lageunterschiedlichen Bildpunkten oder nur auf einem Scheibenausschnittsbild abgebildet werden. Einflüsse, die nicht auf durch die Beleuchtung erzeugte Lichtreflexe in den auf der Scheibe befindlichen Objekten zurückzuführen sind, werden dagegen in beiden Scheibenausschnittsbildern jeweils auf lagegleichen Bildpunkten abgebildet. Die Beleuchtung des zu erfassenden Scheibenausschnittsbildes kann durch vorhandenes Umgebungslicht (Tageslicht) oder durch eine zusätzliche Beleuchtungseinrichtung erfolgen. In dem anschließenden Schritt des Ermitteins des Differenzbildes aus den beiden Scheibenausschnittsbildern werden die Inhalte lagegleicher Bildpunkte voneinander subtrahiert. Im Ergebnis führt dies zu einem Differenzbild, bei dem die Inhalte derjenigen Bildpunkte, die das Ergebnis der Subtraktion lagegleicher Bildpunkte mit gleichem Bildinhalt sind, den Wert 0 aufweisen. Dagegen erhalten diejenigen Bildpunkte des Differenzbildes einen von 0 unterschiedlichen Wert, etwa den Wert 1, deren Bildinhalte, etwa durch das Erfassen von lageunterschiedlichen Lichtreflexen, unterschiedlich sind. Da Störeinflüsse im allgemeinen aus dem Hintergrund erscheinen, werden diese auf beiden Scheibenausschnittsbildern auf lagegleichen Bildpunkten abgebildet und somit durch Ermitteln des Differenzbildes eliminiert. Folglich unterliegen der anschließenden Auswertung ausschließlich diejenigen Signale, die den auf einer Scheibe anhaftenden Objekten zuzuordnen sind.

Die beiden Scheibenausschnittsbilder können etwa dadurch bereitgestellt werden, daß diese von ein und demselben optischen Sensorarray zeitlich aufeinanderfolgend aufgenommen werden, wobei jedoch jedes Scheibenausschnittsbild bei einer unterschiedlichen Beleuchtungskonfiguration hinsichtlich der auf die Scheibe auftreffenden Einfallsrichtung der von einer Beleuchtungsreinrichtung emittierten Lichtstrahlen aufgenommen wird. Bei einer solchen Ausgestaltung wird das zuerst aufgenommene Scheibenausschnittsbild eines Bildpaares in einem Bildspeicher abgelegt, bis das zweite Scheibenausschnittsbild des Bildpaares aufgenommen worden ist. Ferner können die beiden Scheibenausschnittsbilder auch durch Verwendung einer stereoskopischen Sensorarrayanordnung bereitgestellt werden. Diese stereoskopische Sensorarrayanordnung ist so ausgerichtet, daß ab einem bestimmten Abstand zu dieser der von der Sensorarrayanordnung erfaßte Hintergrund auf lagegleichen Bildpunkten abgebildet wird. Als diesbezügliche Entfernung kann beispielsweise die Entfernung der Windschutzscheibe von der vorderen Motorhaubenkante angenommen werden. Zweckmäßigerweise werden die beiden Scheibenausschnittsbilder mit beiden Sensorarrays gleichzeitig aufgenommen. Diese Sensorarrayanordnung vermag auch ohne aktive Beleuchtungseinrichtung bei Vorhandensein von ausreichendem Umgebungslicht zu arbeiten. Reicht das Umgebungslicht nicht aus, ist vorgesehen, dieser stereoskopischen Sensorarrayanordnung eine gemeinsame Beleuchtungseinrichtung zum Beleuchten der Scheibe bzw. der darauf zu detektierenden Objekte zuzuordnen. Bei dieser Anordnung muß nicht notwendigerweise derselbe Scheibenausschnitt betrachtet werden, solange die oben genannte Forderung hinsichtlich der Hintergrundabbildung gegeben ist.

Mit den beschriebenen Vorrichtungen lassen sich in Abhängigkeit der gewählten Tiefenschärfe entweder die äußere Scheibenoberfläche oder die innere Scheibenoberfläche oder beide Scheibenoberflächen beobachten.

Eine Auswertung des ermittelten Differenzbildes kann beispielsweise im Wege einer Energieabschätzung durch eine Differenzbildenergiebestimmung, wie in der deutschen Patentanmeldung DE-A- 197 36 5 84 der Anmelderin beschrieben, erfolgen, welches Verfahren hiermit durch Bezugnahme ebenfalls Gegenstand dieser Beschreibung ist.

Eine Auswertung des ermittelten Differenzbildes kann aber auch hinsichtlich der darin enthaltenen Hell-Dunkel-Übergänge (Kanten) durchgeführt werden. Bei einer solchen Auswertung ist es zweckmäßig, wenn das Auswerteverfahren eine Bearbeitung des Differenzbildes mit einem Kantenoperator beinhaltet, bei welcher Kantenoperation eine Kantenbetonung bei gleichzeitiger Unterdrückung von Gleichflächen erreicht wird. Grundsätzlich kann als Kantenoperation beispielsweise eine Gradientenbildung, eine Ableitung oder eine Verwendung von stochastischen Operatoren eingesetzt werden, wobei der Einsatz stochastischer Operatoren bevorzugt ist.

Zur Eliminierung eines unerwünschten Impulsrauschens, kann das Differenzbild anschließend mediangefiltert werden. Zur weiteren Bearbeitung des Differenzbildes und zur weiteren Eliminierung von möglichen Reststöreinflüssen kann die Auswertung des ermittelten Differenzbildes ferner eine zeitliche Tiefpaßfilterung umfassen. Bei einer solchen Tiefpaßfilterung wird davon ausgegangen, daß zu detektierende Objekte auf der Scheibe über mehrere Bildsequenzen bzw. Bildperioden auf gleichen Bildpunkten erfaßbar sind. Bei dieser Filterung werden daher Schlaglichter oder Reflexe, die etwa durch Kratzer in der Windschutzscheibe hervorgerufen werden und nur in einzelnen Bildsequenzen enthalten sind, eliminiert.

Die Auswertung des Differenzbildes kann in einem weiteren Schritt die Erstellung einer Binärbilddatei aus den Bildpunktinhalten des ermittelten und bearbeiteten Differenzbildes umfassen, so daß im Ergebnis jedem Bildpunkt des Differenzbildes entweder der Wert 0 oder der Wert 1 zugeordnet ist. Die Erzeugung der Binärbilddatei erfolgt durch Vergleich der Bildpunktinhalte mit einem vorbestimmten Schwellwert. An diesem Schritt kann sich eine Gesamtbildenergieberechnung anschließen, bei der die Werte aller Bildpunkte aufsummiert werden, um Aufschluß über die Anzahl der Kanten bzw. Hell-Dunkel-Übergänge (= erfaßte Lichtreflexe) zu erhalten. In einem weiteren Vergleicherschritt erfolgt ein Vergleich der Gesamtbildenergie mit einem konstanten oder adaptiven Schwellwert in einem Vergleicherglied, welches bei Überschreiten des Schwellwertes ein Signal zum Ansteuern eines Aktors, beispielsweise eines Wischermotors ausgibt.

Neben der genannten Auswertung durch eine Gesamtbildenergieberechnung kann auch eine Auswertung durch eine Clusterbildung benachbarter Bildpunkte mit dem Wert 1 erfolgen. Die erzeugte Clusterung ist dann unter Zuhilfenahme üblicher statistischer Methoden auswertbar. Besonders bevorzugt ist ein Auswerteverfahren, bei dem das Ergebnis der statistischen Clusterauswertung zur Einstellung des für die Durchführung des Vergleicherschrittes im Anschluß an die Gesamtenergieberechnung benötigten Schwellwerts verwendet wird. Damit ist der Schwellwert des Vergleichergliedes an die Größe der detektierten Objekte anpaßbar.

Weitere Vorteile der Erfindung ergeben sich aus weiteren Unteransprüchen sowie aus der nachfolgenden Figurenbeschreibung. Es zeigen:
- **Fig. 1:**: eine schematisierte Darstellung einer Vorrichtung zum Detektieren von auf einer lichtdurchlässigen Scheibe befindlichen Objekten unter Verwendung eines einzigen optischen Sensorarrays,
- **Fig. 2:**: ein schematisiertes Blockschaltbild zur Darstellung eines Verfahrens zum Detektieren von auf einer lichtdurchlässigen Scheibe befindlichen Objekten,
- **Fig. 3:**: eine schematisierte Darstellung einer weiteren Vorrichtung zum Detektieren von auf einer lichtdurchlässigen Scheibe befindlichen Objekten unter Verwendung einer stereoskopischen Sensorarrayanordnung und
- **Fig. 4:**: ein schematisiertes Blockschaltbild zur Ermittlung eines Differenzbildes aus Scheibenausschnittsbildern gemäß der in Figur 3 beschriebenen Vorrichtung.

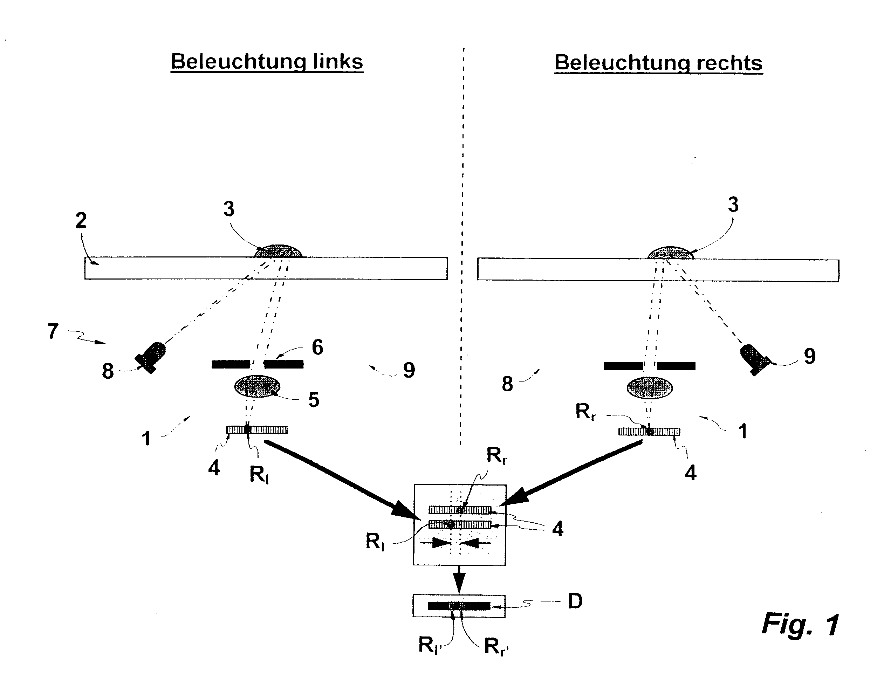

Die in Figur 1 gezeigte Aufnahmeeinheit 1 zum Detektieren von auf einer Scheibe, hier einer Windschutzscheibe 2 befindlichen Regentropfen 3 umfaßt einen optischen Zeilensensor 4, etwa eine CCD-Zeile, eine dem Zeilensensor 4 vorgeschaltete konvexe Linse 5 sowie eine Lochblende 6. Die Aufnahmeeinheit 1 ist auf die Außenseite der Windschutzscheibe 2 focussiert, wobei durch die Lochblende 6 der Tiefenschärfenbereich des auf der photosensitiven Oberfläche des Zeilensensors 4 abgebildeten Windschutzscheibenausschnitts ebenfalls Bereiche geringfügig oberhalb der äußeren Oberfläche der Windschutzscheibe 2 sowie im Bereich der inneren Oberfläche der Windschutzscheibe 2 umfaßt. Zur Erzeugung von Lichtreflexen, in den auf der Windschutzscheibe 2 anhaftenden Regentropfen 3 ist eine Beleuchtungseinrichtung 7 vorgesehen, die bei dem dargestellten Ausführungsbeispiel aus zwei IR-Dioden 8, 9 besteht.

Zur Bereitstellung von zwei Scheibenausschnittsbildern, in denen der durch die Beleuchtungseinrichtung 7 jeweils erzeugte Lichtreflex des auf der Windschutzscheibe 2 befindlichen Regentropfens 3 an lageunterschiedlichen Bildpunkten angeordnet ist, wird ein erstes Scheibenausschnittsbild bei einer Beleuchtung des Regentropfens 3 allein durch die IR-Diode 8 aufgenommen. Diese Situation ist in der linken Hälfte der Figur 1 unter dem Titel "Beleuchtung links" dargestellt. Der durch die Reflektion der von der Leuchtdiode 8 emittierten Lichtstrahlen in dem Regentropfen 3 erzeugte Lichtreflex Rₗ wird mit der notwendigen Abbildungsschärfe von dem Zeilensensor 4 bzw. von einigen seiner Bildpunkte erfaßt. Ein zweites Scheibenausschnittsbild wird anschließend bei einer Beleuchtung der Windschutzscheibe 2 mit der Leuchtdiode 9 aufgenommen, so daß der durch diese Beleuchtung erzeugte Lichtreflex Rᵣ mit ausreichender Abbildungsschärfe von dem Zeilensensor 4 bzw. einiger seiner Bildpunkte aufgenommen werden kann. Diese Aufnahmesituation ist in der rechten Hälfte der Figur 1 unter der Überschrift "Beleuchtung rechts" dargestellt.

Die beiden IR-Dioden 8, 9 sind, wie aus Figur 1 ersichtlich, so angeordnet, daß deren emittierte Lichtstrahlen aus unterschiedlichen Einfallsrichtungen die Windschutzscheibe 2 beleuchten und an entsprechend unterschiedlichen Positionen im Regentropfen 3 einen Lichtreflex Rₗ bzw. Rᵣ erzeugen. Daher bilden sich die von dem Zeilensensor 4 aufgenommenen, durch den Regentropfen 3 erzeugten Lichtreflexe Rₗ, Rᵣ auf zumindest teilweise unterschiedlichen Bildpunkten des Zeilensensors 4 ab. Zur Veranschaulichung ist die Sensorzeile 4 mit den darauf abgebildeten Lichtreflexen Rₗ, Rᵣ im unteren Teil der Figur 1 übereinander angeordnet als Synonym für die aufgenommenen Scheibenausschnittsbilder abgebildet. Wird in einem ersten Verarbeitungsschritt ein Differenzbild aus den beiden Scheibenausschnittsbildern erzeugt, ergibt sich ein virtuelles Differenzbild, wie es schematisiert mit dem Bezugszeichen D gekennzeichnet ist. Bei diesem Differenzbild D sind die Inhalte lagegleicher Bildpunkte des unteren Scheibenausschnittsbildes aufgenommen bei einer Beleuchtung von links von denjenigen des Scheibenausschnittsbildes aufgenommen bei einer Beleuchtung von rechts subtrahiert worden. Lagegleiche Bildpunkte, die einen gleichen Inhalt aufweisen, erhalten somit den Wert 0 und sind in dem Differenzbild D schwarz dargestellt. Betragsmäßige Unterschiede zwischen lagegleichen Bildpunkten werden entsprechend als beleuchtete Bildpunkte in dem Differenzbild D dargestellt. Da sich die in den beiden Scheibenausschnittsbildern erfaßten Lichtreflexe Rₗ, Rᵣ in den dargestellten Ausführungsbeispiel bereichsweise überschneiden, ist dieser Bereich im Differenzbild D ebenfalls schwarz. Das Ergebnis dieser Differenzbildermittlung stellt somit die beiden Lichtreflexe Rₗ, Rᵣ bzw. deren Lichtreflexanteile R_{l'}, R_{r'} dar.

Durch die Bereitstellung der beiden Scheibenausschnittsbilder bei unterschiedlicher Beleuchtungseinfallsrichtung wird erkennbar, daß Lichtreflexe naturgemäß nur dann von der Aufnahmeeinheit 1 erfaßt werden, wenn tatsächlich Objekte, beispielsweise Regentropfen 3 auf der Windschutzscheibe 2 anhaften. Befinden sich auf der Windschutzscheibe 2 dagegen keine Objekte, wird in beiden zeitlich nacheinander aufgenommenen Scheibenausschnittsbildern jeweils derselbe Hintergrund erfaßt, so daß nach einer Differenzbildbildung die Bildpunktinhalte des Differenzbildes sämtlich den Wert 0 aufweisen. Durch die Beleuchtung möglicherweise im Hintergrund erzeugte Lichtreflexe, die von der Aufnahmeeinheit 1 erfaßt werden, werden aufgrund der gegenüber dem Abstand zur Windschutzscheibe 2 sehr viel größeren Entfernung zum einen nur geringe Lichtintensitäten aufweisen; zum anderen werden diese auf lagegleichen Bildpunkten abgebildet.

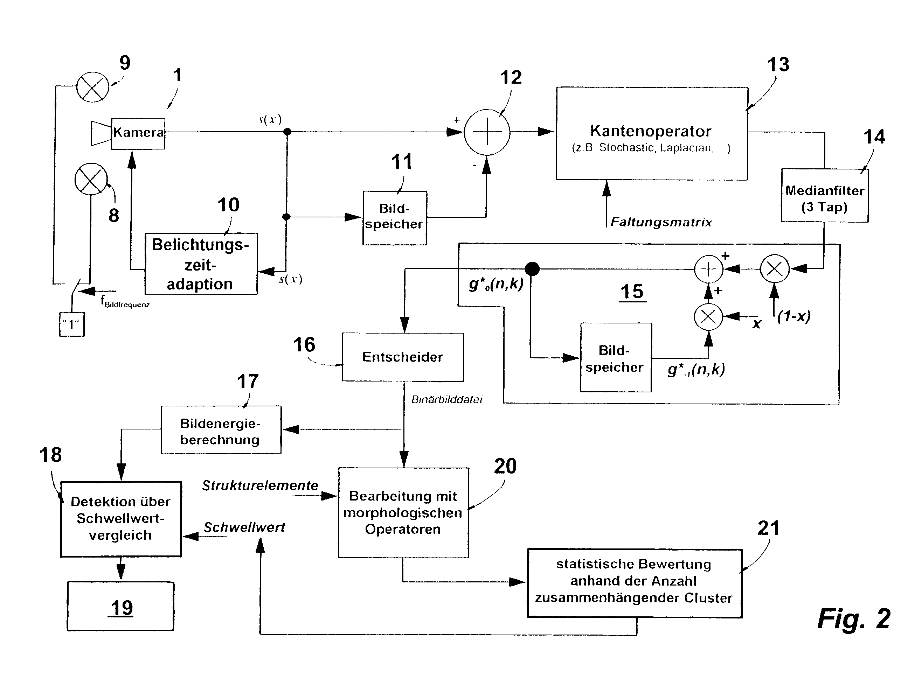

In dem in Figur 2 schematisch dargestellten Blockschaltbild ist erkennbar, daß die Aufnahmeeinheit 1 durch eine Vorrichtung 10 zur Belichtungszeitadaption belichtungszeitgesteuert ist. Entsprechend der wechselweisen Anschaltung der IR-Diode 8 bzw. der IR-Diode 9 wird gleichzeitig mit der Aufnahmeeinheit 1 jeweils ein Scheibenausschnittsbild aufgenommen. Das zuerst aufgenommene Scheibenausschnittsbild eines zu verarbeitenden Bildpaares wird in einen Bildspeicher 11 abgelegt und dann wieder aus diesem abgerufen, wenn das zweite Scheibenausschnittsbild durch die Aufnahmeeinheit 1 aufgenommen worden ist. Die beiden Scheibenausschnittsbilder eines Bildpaares beaufschlagen anschließend einen Differenzbildbildner 12, in dem auf Grundlage der beiden Scheibenausschnittsbilder das Differenzbild D in der oben beschriebenen Weise ermittelt.

Das Differenzbild D bzw. die in den einzelnen Bildpunkten des Differenzbildes D enthaltene Information wird anschließend ausgewertet. In einem ersten Auswerteschritt wird eine Kantenoperation in einem Kantenoperatorglied 13 durchgeführt, durch welche Kantenoperation eine Kantenbetonung bzw. eine Betonung der Hell-Dunkel-Übergänge des Differenzbildes D bei gleichzeitiger Unterdrückung von Gleichflächen durchgeführt wird. Als Kantenoperator werden bevorzugt stochastische Operatoren verwendet.

Im Anschluß an die Kantenoperation wird das Differenzbild in einem Medianfilter 14 zur Unterdrückung von eventuell vorhandenem Impulsrauschen gefiltert. Die Filterlänge beträgt in dem dargestellten Ausführungsbeispiel drei Bildpunkte; selbstverständlich können auch andere geeignete Filterlängen vorgesehen sein. Das mediangefilterte Differenzbild wird in einem weiteren Auswerteschritt in einem Tiefpaßfilter 15 zeitlich tiefpaßgefiltert, so daß nach dieser Filterung in denjenigen Bildpunkten des Differenzbildes Werte ungleich 0 enthalten sind, die über eine vorbestimmte Anzahl von Bildperioden erfaßt worden sind. Herausgefiltert werden durch das Tiefpaßfilter 15 somit Schlaglichter, etwa durch entgegenkommende Fahrzeuge oder durch Kratzer in der Windschutzscheibe, die nur in einzelnen Bildperioden vorhanden sind.

Das gefilterte Differenzbild beaufschlagt im Anschluß ein Entscheiderglied 16 in dem aus dem eingangsseitig anliegenden Differenzbild eine Binärbilddatei erzeugt wird, so daß jeder Bildpunkt des bis zu diesem Schritt verarbeiteten Differenzbildes entweder den Wert 0 oder den Wert 1 hat. Diese Funktion des Entscheiders 16 wird durch Beaufschlagen desselben mit einem vorbestimmten Schwellwert erreicht.

Die weitere Bildverarbeitung wird in zwei Bearbeitungszweigen durchgeführt - einer Bildenergieberechnung mit anschließendem Schwellwertvergleich sowie einer Clusterung mit anschließender statistischer Bewertung. Die Bildenergieberechnung erfolgt in einem Bildenergieberechnungsglied 17, in dem die Anzahl derjenigen Bildpunkte des als Binärbilddatei vorliegenden Differenzbildes ermittelt wird, deren Wert 1 beträgt. In Abhängigkeit von der Beleuchtungseinrichtung, und zwar in Abhängigkeit von der Anzahl der verwendeten Beleuchtungsmittel für jedes Scheibenausschnittsbild kann Aufschluß über die tatsächlich Anzahl der auf der Windschutzscheibe 2 detektierten Regentropfen gewonnen werden. Dieser Wert beaufschlagt ein Vergleicherglied 18, dessen Ausgang am Eingang eines Mikroprozessors 19 zur Ansteuerung von nicht näher dargestellten Aktoren, etwa eines Wischermotors anliegt. Das Vergleicherglied 18 ist durch einen Schwellwert beaufschlagt, der bei dem dargestellten Ausführungsbeispiel einstellbar ist.

Zur weiteren Bewertung der in der Bildenergieberechnung ermittelten Reflexanzahl erfolgt in einem zu diesem parallelen Auswerteschritt zunächst eine ortsabhängige Clusterung derjenigen Bildpunktinhalte, deren Wert 1 ist. Gemäß den vorgegebenen Clusterbedingungen werden diejenigen Bildpunkte als ein Cluster zusammengefaßt, die den Clusterbedingungen genügen. Dieser Bearbeitungsschritt erfolgt in einem Clusterglied 20. Ausgangsseitig an dem Clusterglied 20 ist ein statistisches Bewertungsglied 21 angeschlossen, in welchem die Anzahl der gebildeten Cluster statistisch ausgewertet wird. Als Ergebnis ist eine Größenbewertung der detektierten Regentropfen möglich. Das Ergebnis der statistischen Bewertung wird in dem dargestellten Ausführungsbeispiel zur Adaption des das Vergleicherglied 19 beaufschlagenden Schwellwertes verwendet.

Somit erfolgt eine unmittelbare Rückkopplung von sich morphologisch ändernden Eigenschaften der detektierten Objekte hinsichtlich einer daran angepaßten Ansteuerung von Aktoren.

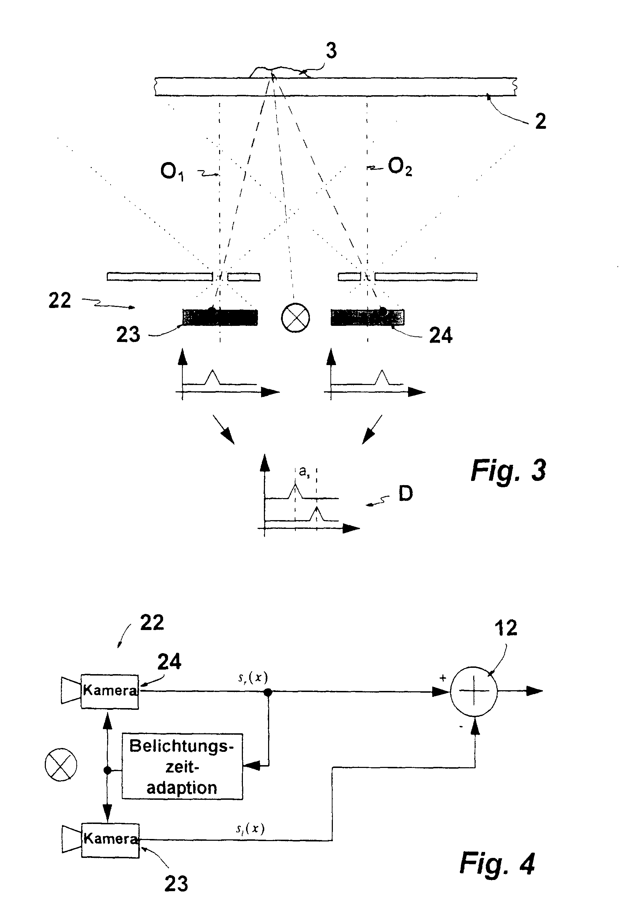

Figur 3 zeigt eine weitere Aufnahmeeinheit 22, die aus zwei Kamerasensoren 23, 24 besteht. Die beiden Kamerasensoren 23, 24 umfassen wie auch das optische Sensorarray der Figur 1 jeweils eine Optik sowie eine vorgeschaltete Lochblende. Die Kamerasensoren 23, 24 sind auf unendlich focussiert, wobei sich jedoch die äußere sowie die innere Oberfläche der Windschutzscheibe 2 im Tiefenschärfenbereich der Abbildung befinden. Die optischen Achsen der beiden Kamerasensoren O₁ bzw. O₂ sind parallel zueinander und beabstandet voneinander angeordnet. Wie auch bei der Anordnung gemäß Figur 1 erfolgt bei dieser Aufnahmeeinheit 22 eine Abbildung der durch den Regentropfen 3 erzeugten Lichtreflexe auf unterschiedlichen Bildpunkten der Kamerasensoren 23 und 24. In bezüglich der Windschutzscheibe 2 weiterer Entfernung abgebildete Hintergrundeinflüsse beaufschlagen dagegen lagegleiche Bildpunkte. Es erfolgt somit eine Disparitätsabschätzung zur Tiefenerfassung. Wie zuvor beschrieben, erfolgt ausgehend von diesen beiden gleichzeitig aufgenommenen Scheibenausschnittsbildern die Differenzbildbildung.

Figur 4 zeigt in einem schematisierten Blockschaltbild nochmals die Aufnahmeeinheit 22, die belichtungszeitgesteuert ist. Die Ausgänge der beiden Kamerasensoren 23, 24 beaufschlagen unmittelbar den Differenzbildbildner 12. Die weitere Auswertung erfolgt entsprechend der zu Figur 2 beschriebenen Auswerteverfahren.

Aus der Beschreibung der Erfindung wird deutlich, daß durch Ermitteln des Differenzbildes aus zwei Einzelbildern aufwandsgünstig beispielsweise ein Regensensor erstellbar ist, dessen Daten sehr verläßlich sind. Als optische Sensorarrays können sowohl Zeilen- als auch Flächenkameras verwendet werden. Die in den Figuren 3 und 4 dargestellte stereoskopische Sensorarrayanordnung kann neben einer Funktion als Aufnahmeeinheit 22 eines Regensensors auch weitere Überwachungsfunktionen übernehmen.

Aus der Beschreibung der Erfindung wird ferner deutlich, daß die Auswertung der Scheibenausschnittsbilder anstelle der in den Figuren dargestellten schaltungstechnischen Auswertung Software-mäßig erfolgen kann.

### Zusammenstellung der Bezugszeichen

- 1: Aufnahmeeinheit
- 2: Windschutzscheibe
- 3: Regentropfen
- 4: Zeilensensor
- 5: konvexe Linse
- 6: Lochblende
- 7: Beleuchtungseinrichtung
- 8: IR-Diode
- 9: IR-Diode
- 10: Vorrichtung zur Belichtungszeitadaption
- 11: Bildspeicher
- 12: Differenzbildbildner
- 13: Kantenoperatorglied
- 14: Medianfilter
- 15: Tiefpaßfilter, zeitlich arbeitend
- 16: Entscheiderglied
- 17: Bildenergieberechnungsglied
- 18: Vergleicherglied
- 19: Mikroprozessor
- 20: Clusterglied
- 21: statistisches Bewertungsglied
- 22: Aufnahmeeinheit
- 23: Kamerasensor
- 24: Kamerasensor

- D: Differenzbild
- O₁: optische Achse
- O₁: optische Achse
- Rᵣ: Reflex bei rechter Beleuchtung
- Rₗ: Reflex bei linker Beleuchtung
- R_{r'}: Reflexanteil bei rechter Beleuchtung
- R_{l'}: Reflexanteil bei linker Beleuchtung

## Patentansprüche

1. Verfahren zum Delektieren von auf einer lichtdurchlässigen Scheibe (2) befindlichen, bei einer Beleuchtung Lichtreflexe erzeugenden Objekten (3) unter Verwendung einer zumindest ein optisches Sensorarray enthaltenden Aufnahmeeinheit (1, 22) umfassend folgende Schritte:
- Beleuchten der Scheibe (2) zum Erzeugen von Lichtreflexen (Rₗ, Rᵣ) in oder an auf der Scheibe (2) befindlichen Objekten (3) von derjenigen Scheibenseite, hinter der die Aufnahmeeinheit (1, 22) angeordnet ist,
- bildliches Erfassen eines beleuchteten Scheibenausschnitts mit der Aufnahmeeinheit (1, 22),
**gekennzeichnet durch**
- Bereitstellen von zwei, ein Bildpaar bildenden Scheibenausschnittsbildem, in welchen beiden Bildern der oder die **durch** die Beleuchtung erzeugten Lichtreflexe (Rₗ, Rᵣ) eines auf der Scheibe (2) befindlichen Objektes (3) jeweils an lageunterschiedlichen Bildpunkten angeordnet sind,
- Ermitteln des Differenzbildes (D) der beiden Bilder eines Bildpaares **durch** Subtraktion der Inhalte lagegleicher Bildpunkte des einen Scheibenausschnittsbildes von denjenigen des anderen Scheibenausschnittsbildes und
- anschließendes Auswerten des ermittelten Differenzbildes hinsichtlich der den einzelnen Bildpunkten zugeordneten Inhalten.

2. Verfahren nach Anspruch 1, **dadurch gekennzeichnet, daß** die beiden Scheibenausschnittsbilder mit ein und demselben optischen Sensorarray (4), jedoch bei einer jeweils unterschiedlichen Beleuchtungskonfiguration aufgenommen werden, die sich hinsichtlich ihrer auf die Scheibe (2) auftreffenden Einfallsrichtung unterscheiden.

3. Verfahren nach Anspruch 1, **dadurch gekennzeichnet, daß** die beiden Scheibenausschnittsbilder mit zwei voneinander beabstandeten optischen Sensorarrays (23, 24) unter Verwendung einer gemeinsamen Beleuchtungseinrichtung aufgenommen werden.

4. Verfahren nach einem der Ansprüche 1 bis 3, **dadurch gekennzeichnet, daß** die Auswertung des ermittelten Differenzbildes (D) eine Kantenoperation beinhaltet, bei der eine Verstärkung der Kantenbetonung bei gleichzeitiger Unterdrückung von Gleichflächen erreicht wird.

5. Verfahren nach Anspruch 4, **dadurch gekennzeichnet, daß** die Kantenoperation durch eine Verwendung stochastischer Operatoren durchgeführt wird.

6. Verfahren nach einem der Ansprüche 1 bis 5, **dadurch gekennzeichnet, daß** die Auswertung des ermittelten Differenzbildes (D) eine zeitliche Tiefpaßfilterung umfaßt.

7. Verfahren nach einem der Ansprüche 1 bis 6, **dadurch gekennzeichnet, daß** die Auswertung des Differenzbildes (D) den Schritt des Erstellens einer Binärbilddatei aus dem Bildpunktinhalten des Differenzbildes beinhaltet, so daß jedem Bildpunkt entweder der Wert 0 oder der Wert 1 zugeordnet ist.

8. Verfahren nach Anspruch 7, **dadurch gekennzeichnet, daß** die Auswertung des Differenzbildes (D) eine Gesamtbildenergieberechnung beinhaltet, bei der die Werte aller Bildpunkte des Differenzbildes (D) aufsummiert werden, an welchen Energieberechnungsschritt sich ein Vergleicherschritt anschließt, in dem die ermittelte Gesamtbildenergie mit einem oder mehreren Schwellwerten verglichen wird.

9. Verfahren nach Anspruch 7, **dadurch gekennzeichnet, daß** die Auswertung des Differenzbildes (D) eine Clusterung benachbarter Bildpunkte mit dem Wert 1 umfaßt, an welche Clusterung sich eine statistische Auswertung der erzeugten Cluster anschließt.

10. Verfahren nach Anspruch 8 und 9, **dadurch gekennzeichnet, daß** der für die Durchführung des Vergleicherschrittes im Anschluß an die Gesamtbildenergieberechnung benötigte Schwellwert in Abhängigkeit von dem Ergebnis der statistischen Clusterauswertung eingestellt wird.

11. Vorrichtung zum Detektieren von auf einer lichtdurchlässigen Scheibe (2) befindlichen beleuchteten Objekten (3), umfassend eine Beleuchtungseinrichtung (7) zum Beleuchten der Scheibe (2) von einer Seite, eine Aufnahmeeinheit (1) mit einem optischen Sensorarray (4) zum Erfassen von der Beleuchtungseinrichtung emittierter und reflektierter Lichtstrahlen und eine Auswerteeinheit, wobei als Aufnahmeeinheit (1) ein einziges Sensorarray (4) in einer solchen Anordnung zur Scheibe (2) vorgesehen ist, und wobei die zu beobachtende Scheibenoberfläche des von dem Sensorarray (4) erfaßten Scheibenausschnittes im Tiefenschärfenbereich der sich auf der photosensitiven Oberfläche des Sensorarrays (4) darstellenden Abbildung des Scheibenausschnittes liegt, **dadurch gekennzeichnet, daß** die Beleuchtungseinrichtung (7) zumindest zwei voneinander beabstandete, den von der Aufnahmeeinheit (1) betrachteten Scheibenausschnitt aus unterschiedlichen Richtungen beleuchtende Lichtquellen (8, 9) umfaßt, so daß Störeinflüsse, die nicht auf durch die Beleuchtung erzeugte Lichtreflexe in den auf der Scheibe (2) befindlichen Objekten (3) zurückzuführen sind, in beiden Scheibenausschnittsbildern jeweils auf lagegleichen Bildpunkten abgebildet werden, wobei die Inhalte ladegleicher Bildpunkte des einen Scheibenausschnittsbildes von demjenigen des anderen Scheibenausschnittsbildes subtrahiert werden, so daß nach einer Differenzbildung die Störeinflüsse enthaltenden Bildpunktinhalte des Differenzwertes sämtlich den Wert 0 aufweisen.

12. Vorrichtung zum Detektieren von auf einer lichtdurchlässigen Scheibe (2) befindlichen beleuchteten Objekten (3), umfassend eine Aufnahmeeinheit (22) zum Erfassen von Lichtreflexen und eine Auswerteeinheit, **dadurch gekennzeichnet, daß** die Aufnahmeeinheit (22) zwei voneinander beabstandete optische Sensorarrays (23, 24) in einer stereoskopischen Anordnung umfaßt, bei der die zu beobachtende Scheibenoberfläche des von den Sensorarrays (23, 24) erfaßten Scheibenausschnittes im Tiefenschärfenbereich der sich auf den photosensitiven Oberflächen der Sensorarrays (23, 24) darstellenden Abbildung des Scheibenausschnittes liegt, welche optischen Sensorarrays zum Betrachten eines Scheibenausschnittes, dergestalt angeordnet sind, daß der sich in einem bestimmten Abstand zur betrachtenden Scheibe befindliche Hintergrund auf beiden Sensorarrays an lagegleichen Bildpunkten abgebildet wird, so daß hintergrundbedingte Störeinflüsse durch eine Subtraktion der Bildpunktinhalte der lagegleichen Bildpunkte der beiden Scheibenausschnittsbilder voneinander sämtlich den Wert 0 aufweisen.

13. Vorrichtung nach Anspruch 12, **dadurch gekennzeichnet, daß** der Aufnahmeeinheit (22) eine gemeinsame Beleuchtungseinrichtung zugeordnet ist.

14. Vorrichtung nach Anspruch 12 oder 13, **dadurch gekennzeichnet, daß** die optischen Achsen (O₁, O₂) der Sensorarrays (23, 24) parallel zueinander ausgerichtet sind.

15. Vorrichtung nach Anspruch 12, 13 oder 14, **dadurch gekennzeichnet, daß** die Scheibe eine Windschutzscheibe (2) eines Kraftfahrzeuges ist.

## Claims

1. Method of detecting objects (3), which are situated on a light-permeable screen (2) and produce light reflexes when illuminated, by using a receiver unit (1, 22) which contains at least one optical sensor array, said method including the following steps:
- illuminating the screen (2) to produce light reflexes (R₁, R_{1'},) in or on objects (3), situated on the screen (2), from the screen side behind which the receiver unit (1, 22) is disposed, and
- determining, by images, an illuminated screen section with the receiver unit (1, 22),
**characterised by**
- preparing two screen section images, which form one pair of images, and in which two images the light reflex or reflexes (R₁, R_{1'}), produced by the illumination, of an object (3) situated on the screen (2), are each disposed at differently positioned image points,
- ascertaining the differential image (D) of the two images of a pair of images by subtracting the contents of identically positioned image points of the one screen section image from those of the other screen section image, and
- subsequently evaluating the ascertained differential image with regard to the contents associated with the individual image points.

2. Method according to claim 1, **characterised in that** the two screen section images are received with one and the same optical sensor array (4), but each having a different illumination configuration, which configurations differ in respect of their direction of incidence striking upon the screen (2).

3. Method according to claim 1, **characterised in that** the two screen section images are received with two spaced-apart optical sensor arrays (23, 24) by using a common illuminating arrangement.

4. Method according to one of claims 1 to 3, **characterised in that** the evaluation of the ascertained differential image (D) contains an edge operation, whereby an intensification of the edge emphasis is achieved with a simultaneous suppression of identical faces.

5. Method according to claim 4, **characterised in that** the edge operation is accomplished by using stochastical operators.

6. Method according to one of claims 1 to 5, **characterised in that** the evaluation of the ascertained differential image (D) includes a lowpass filtering with respect to time.

7. Method according to one of claims 1 to 6, **characterised in that** the evaluation of the differential image (D) contains the step of creating a binary file from the image point contents of the differential image, so that either the value 0 or the value 1 is associated with each image point.

8. Method according to claim 7, **characterised in that** the evaluation of the differential image (D) contains a total image energy calculation, wherein the values of all of the image points of the differential image (D) are summed-up, said energy calculation step being followed by a comparator step, in which the ascertained total image energy is compared with one or more threshold values.

9. Method according to claim 7, **characterised in that** the evaluation of the differential image (D) includes a clustering of adjacent image points having the value 1, a statistical evaluation of the clusters produced following said clustering.

10. Method according to claims 8 and 9, **characterised in that** the threshold value, which is required for accomplishing the comparator step subsequent to the total image energy calculation, is set in dependence on the result of the statistical cluster evaluation.

11. Apparatus for detecting illuminated objects (3) situated on a light-permeable screen (2), said apparatus including an illuminating arrangement (7) for illuminating the screen (2) from one side, a receiver unit (1) with an optical sensor array (4) for determining light rays emitted and reflected by the illuminating arrangement, and an evaluating unit, wherein a single sensor array (4) is provided as the receiver unit (1) in such a disposition relative to the screen (2), and wherein the screen surface to be observed of the screen section ascertained by the sensor array (4) lies in the depth of field range of the imagery of the screen section being represented on the photosensitive surface of the sensor array (4), **characterised in that** the illuminating arrangement (7) includes at least two spaced-apart light sources (8, 9), which illuminate the screen section, observed by the receiver unit (1), from various directions, so that disturbing influences, which are not to relate back to light reflexes produced by the illumination in the objects (3) situated on the screen (2), are each illustrated in both screen section images at identically positioned image points, the contents of identically positioned image points of one screen section image being subtracted from the content of the other screen section image, so that the image point contents of the differential value, containing disturbing influences, all have the value 0 after a difference has been formed.

12. Apparatus for detecting illuminated objects (3) situated on a light-permeable screen (2), said apparatus including a receiver unit (22) for ascertaining light reflexes and an evaluating unit, **characterised in that** the receiver unit (22) includes two spaced-apart optical sensor arrays (23, 24) in a stereoscopic disposition, wherein the screen surface to be observed of the screen section determined by the sensor arrays (23, 24) lies in the depth of field range of the imagery of the screen section being represented on the photosensitive surfaces of the sensor arrays (23, 24), which optical sensor arrays are disposed in such a manner, to observe a screen section, that the background, situated at a predetermined spacing from the screen to be observed, is illustrated on both sensor arrays at identically positioned image points, so that background-produced disturbing influences all have the value 0 by a subtraction of the image point contents of the identically positioned image points of the two screen section images from one another.

13. Apparatus according to claim 12, **characterised in that** the receiver unit (22) has a common illuminating arrangement associated therewith.

14. Apparatus according to claim 12 or 13, **characterised in that** the optical axes (O₁, O₂) of the sensor arrays (23, 24) are orientated parallel to each other.

15. Apparatus according to claim 12, 13 or 14, **characterised in that** the screen is a windscreen (2) of an automotive vehicle.

## Revendications

1. Procédé pour détecter des objets (3) se trouvant sur une plaque transparente (2) et générant des réflexions lumineuses lors de l'éclairage, en utilisant un dispositif photographique comportant au moins un bloc de détection optique (1, 22) selon les étapes suivantes :
- Eclairage de la plaque (2) pour générer des réflexions lumineuses (Rₗ, Rᵣ) sur ou dans les objets (3) se trouvant sur la plaque (2) à partir du côté de la plaque derrière laquelle se trouve le dispositif photographique (1, 22),
- Analyse graphique d'une section éclairée de la plaque à l'aide du dispositif photographique (1, 22),
**caractérisé par**
- la mise à disposition de deux images d'une section de plaque, formant une paire d'images, sachant que dans ces deux images la ou les réflexions lumineuses (Rₗ, Rᵣ) produites par éclairage d'un objet (3) se trouvant sur la plaque (2) sont reproduites sur des points d'images situés à des positions différentes,
- l'extraction d'une image différentielle (D) à partir des deux images d'un couple d'images en soustrayant les contenus des points d'image ayant la même position sur une section d'image de la plaque de ceux de l'autre section d'image de la plaque et
- l'exploitation de l'image différentielle dégagée d'un point de vue des contenus affectés aux points d'image.

2. Procédé selon la revendication 1, **caractérisé en ce que** les deux sections d'image sont clichées par un seul et même bloc de détection optique (4), néanmoins sous une configuration d'éclairage différente en ce qui concerne l'angle d'incidence des rayons lumineux émis frappant la plaque (2).

3. Procédé selon la revendication 1, **caractérisé en ce que** les deux sections d'image soient clichées par deux blocs de détection optique (23, 24) à distance l'un de l'autre, en utilisant un dispositif d'éclairage commun.

4. Procédé selon l'une des revendications 1 à 3, **caractérisé en ce que** l'analyse de l'image différentielle (D) déterminée intègre un extracteur de contours, lequel permet, lors d'une opération de détection des contours, d'accentuer les contours tout en estompant les surfaces identiques.

5. Procédé selon la revendication 4, **caractérisé en ce que** l'extraction de contours soit réalisée en ayant recours à des opérateurs de détection stochastique.

6. Procédé selon l'une des revendications 1 à 5, **caractérisé en ce que** l'analyse de l'image différentielle (D) déterminée comprenne un filtrage temporel passe bas.

7. Procédé selon l'une des revendications 1 à 6, **caractérisé en ce que** l'exploitation de l'image différentielle (D) comprenne une étape d'élaboration de fichier binaire à partir des contenus des points de l'image différentielle, de sorte qu'il est possible d'attribuer à chaque point d'image, soit la valeur 0, soit la valeur 1.

8. Procédé selon la revendication 7, **caractérisée en ce que** l'exploitation de l'image différentielle (D) comprenne un calcul énergétique de l'ensemble de l'image au cours duquel les valeurs de tous les points de l'image différentielle (D) sont additionnés, lequel calcul énergétique sera suivi d'une étape de comparaison au cours de laquelle l'énergie de l'ensemble de l'image ainsi déterminée est comparée à une ou plusieurs valeurs de seuil.

9. Procédé selon la revendication 7, **caractérisée en ce que** l'exploitation de l'image différentielle (D) comprenne une formation de clusters de points voisins ayant la valeur 1, clustérisation qui fera ensuite l'objet d'une exploitation statistique.

10. Procédé selon la revendication 8 et 9, **caractérisé en ce que** la valeur de seuil nécessaire pour réaliser l'étape de comparaison qui suit le calcul énergétique de l'image totale soit ajustée en fonction du résultat de l'exploitation statistique des clusters.

11. Dispositif pour détecter des objets (3) éclairés se trouvant sur une plaque (2) transparente, comprenant un dispositif d'éclairage (7) pour éclairer la plaque (2) par un côté, un dispositif photographique (1) avec un bloc de détection optique (4) pour capter les rayons lumineux émis par le dispositif d'éclairage et réfléchis et une unité d'exploitation, sachant que fait office de dispositif photographique (1) un seul bloc de détection disposé de telle sorte par rapport à la plaque (2) que la surface de plaque à observer, comprise dans la section de plaque captée par le bloc de détection (4), soit située dans une plage de profondeur de champ de la représentation de la section de plaque projetée sur la surface photosensible du bloc de détection (4), **caractérisé en ce que** le dispositif d'éclairage (7) comporte au moins deux sources lumineuses (8, 9), à distance l'une de l'autre, qui éclairent la section de plaque visée par le dispositif photographique (1) à partir de différentes directions, de sorte que les influences parasites, qui ne sont pas dues aux objets (3) se trouvant sur la plaque (2) et produisant des réflexions lumineuses par éclairage, sont représentées, dans les deux images partielles de la plaque, par des points occupant la même position sachant que les contenus de ces points d'image de même position apparaissant sur une image partielle de la plaque sont soustraits de ceux de l'autre image partielle de la plaque, de sorte qu'après avoir fait la différence entre les contenus des points d'image formés par les influences parasites, toutes les valeurs différentielles présentent une valeur 0.

12. Dispositif pour détecter des objets (3) éclairés se trouvant sur une plaque (2) transparente, comprenant un dispositif photographique (22) destiné à capter les réflexions lumineuses et une unité d'exploitation, **caractérisé en ce que** le dispositif photographique (22) comprenne deux blocs de détection optiques (23, 24) situés à distance l'un de l'autre, en disposition stéréoscopique par rapport à la plaque, pour laquelle la surface de la plaque à observer comprise dans la section de plaque visée par les blocs de détection (23, 24) est située dans la plage de profondeur de champ de l'image de cette section de plaque reproduite sur les surfaces photosensibles des blocs de détection, lesquels sont disposés, afin d'observer la section de plaque, de telle manière que l'arrière-plan se trouvant à une certaine distance de la plaque surveillée est représenté sur les deux blocs de détection par des points d'images occupant la même position, de sorte que les influences parasites dues à l'arrière-plan présentent toutes la valeur 0 après soustraction des contenus des points d'image occupant la même position sur les représentations des deux sections d'image.

13. Dispositif selon la revendication 12, **caractérisé par le fait qu'**un dispositif d'éclairage commun est affecté au dispositif photographique (22).

14. Dispositif selon la revendication 12 ou 13, **caractérisé par le fait que** tous les axes optiques (O₁, O₂) des blocs de détection optique (23, 24) sont orientés de manière parallèle.

15. Dispositif selon la revendication 12, 13 ou 14, **caractérisé par le fait que** la plaque peut être le pare-brise (2) d'un véhicule à moteur.
